# EUROPÄISCHE PATENTSCHRIFT

(11) **EP 1 380 475 B1**
(45) Veröffentlichungstag und Bekanntmachung des Hinweises auf die Patenterteilung: **08.03.2006**
(21) Anmeldenummer: 03015510.5
(22) Anmeldetag: 09.07.2003
(51) Int. Cl.: B60R 21/16

(54) **Oberkörper-Seitenschutzeinrichtung für einen Fahrzeuginsassen und Fahrzeugsitz**
Torso side protection device for a vehicle occupant and a vehicle seat
Dispositif de protection latérale du torse pour un passager de véhicule et un siège de véhicule

(30) Priorität: 12.07.2002 DE 10231631
(43) Veröffentlichungstag der Anmeldung: 14.01.2004
(73) Patentinhaber: TRW Automotive GmbH, 73553 Alfdorf (DE)
(72) Erfinder: Acker, Dominique, 74417 Gschwend (DE); Hofmann, Sven, 73525 Schwäbisch Gmünd (DE); Hirth, Jürgen, 74417 Gschwend (DE); Ellerbrok, Norbert, 73635 Rudersberg (DE); Loos, Andreas, 73098 Rechberghausen (DE)
(74) Vertreter: Kitzhofer, Thomas

(56) Entgegenhaltungen:
- DE-A- 3 833 889
- DE-A- 19 930 157
- US-A- 3 731 949
- US-A- 5 439 247
- US-A- 5 722 685

## Beschreibung

Die Erfindung betrifft eine Oberkörper-Seitenschutzeinrichtung für einen Insassen eines einen Fahrzeugsitz aufweisenden Fahrzeugs, gemäß dem Oberbergriff des Anspruchs 1. Darüber hinaus betrifft die Erfindung einen Fahrzeugsitz.

Solche Seiten-Schutzeinrichtungen sind beispielsweise sitzintegrierte Seitengassack-Systeme mit kissenfönnigen Gassäcken. Der Gassack schiebt sich beim Aufblasen zwischen den Oberkörper und die Seitenwand. Wird die Seitenwand bzw. die Tür deformiert, wird der Insasse über den Gassack weiter von der deformierten Seitenwand oder Tür beabstandet.

Die kissenförmigen Gassäcke führen dazu, daß bei einer Deformation der Seitenwand bzw. der Tür der dadurch entstehende Druck auf den Insassen gleichmäßig verteilt wird.

Eine Seitenschutzeinrichtung mit den Merkmalen des Oberbegriffs des Anspruchs 1 ist aus der US 5 439 247 bekannt. Die Schutzeinrichtung ist an einer Seitentür oder im Dachbereich des Fahrzeugs befestigt. Der Gassack der Schutzeinrichtung hat die Form eines ringförmigen Schlauchs, der in Strömungsverbindung mit einem aufblasbaren Mittelteil des Gassacks steht.

Die Erfindung schafft eine Oberkörper-Seitenschutzeinrichtung, die bei einer Intrusion eine schnelle Verschiebung unter möglichst geringer Belastung des Insassen ermöglicht.

Dies wird mit einer Oberkörper-Seitenschutzeinrichtung der eingangs genannten Art durch die kennzeichnenden Merkmale des Anspruchs 1 erreicht.

Die Haupterstreckungsrichtung ist die Richtung mit der größten Ausdehnung des Gassacks. Der Gassack deckt also, seitlich gesehen, von der Hüfte bis zur Schulter den Oberkörper ab. Die ringförmige Kammer führt dazu, daß im Bereich der Hüfte und der Schulter (also oberhalb der Sitzfläche bzw. im Bereich des oberen Endes der Rückenlehne) die Kammer den Raum zwischen Hüfte/Schulter und Seitenwand bzw. Tür ausfüllt und diese Teile des Körpers möglichst vollständig abdeckt. Im Gegensatz zum Thorax- und Abdomenbereich, der seitlich "weich" ist, sind die Knochen im Bereich der Hüfte und der Schulter sehr stabil, so daß die Krafteinwirkung des Insassen durch Krafteinleitung hauptsächlich in diesen Bereichen erfolgt, wodurch eine schnelle Verschiebung erzielbar ist. Im mittleren Bereich, der nicht aufblasbar ist oder eine geringe Dicke aufweist, liegen vorzugsweise die äußersten Rippenbereiche, in die weniger Kraft eingeleitet wird. Der Oberkörper-Seitengassack ist damit an die Form des Oberkörpers zielgerichtet angepaßt. Ein weiterer Vorteil des speziellen Oberkörper-Seitengassacks besteht im geringen Aufblasvolumen. Bereits ein Volumen von 8 bis 10 1 ist ausreichend, um die gewünschte Schutzwirkung entfalten zu können. Aufgrund dieses geringen Volumens ist auch eine sehr schnelle Aufblaszeit erreichbar. Ferner sind aufgrund des mittleren Bereichs große Gassack-Innendrücke möglich, denn der Gassack baucht im Gegensatz zu einem kissenfärrnigen Gassack nicht in der Mitte aus.

Gemäß der bevorzugten Ausführungsform ist der mittlere Bereich sogar nicht aufblasbar ausgeführt, indem beispielsweise das Gassackgewebe über eine Naht zur Kammer abgetrennt ist.

Zur optimalen Strömung ist die aufblasbare Kammer umfangsmäßig ringförmig geschlossen ausgeführt.

In Seitenansicht des eingebauten, aufgeblasenen Gassacks hat die Kammer einen oberen und einen unteren Abschnitt. Diese Abschnitte sind jeweils breiter als seitliche Abschnitte, welche den oberen und den unteren Abschnitt miteinander verbinden. Das größte Kammervolumen ist also im Bereich der Hüfte und der Schulter vorgesehen, wogegen die fast linear verlaufenden seitlichen Abschnitte, die sich seitlich, d.h. nahe des Rückens bzw. nahe von Brust und Bauch und längs des Thorax- und Abdomenbereichs, erstrecken, ein relativ geringes Volumen aufweisen.

Erfindungsgemäß kann auch vorgesehen sein, daß der aufgeblasene Gassack in Seitenansicht in eingebautem Zustand längs einer Breite von maximal etwa 300 mm parallel zur Rückenlehne von der Sitzfläche aus aufwärts verläuft. Der Gassack ist vorzugsweise ein relativ schmales eiförmiges sich aufwärts erstreckendes Gebilde.

Der mittige Bereich erstreckt sich etwa 200 mm über der Sitzfläche beginnend bis maximal ca. 150 mm unterhalb des oberen Randes der Rückenlehne. Bevorzugt hat der nicht aufblasbare Bereich eine Länge von 200 bis 250 mm und eine Breite von 80 bis 120 mm.

Allgemeiner definiert ist der Seitengassack, der bei der Erfindung eingesetzt wird, so ausgerichtet, daß sich der mittlere Bereich oberhalb der Hüfte bis zum oberen Thoraxbereich eines "genormten" Insassen in Form eines sogenannten EUROSID Nr. 2-Dummies oder eines in USA gebräuchlichen SI-Dummies II-S erstreckt. Die Kammer verläuft dabei von der Hüfte bis zur Schulter dieser Dummies.

Die Erfindung betrifft darüber hinaus einen Fahrzeugsitz, der eine in der Rückenlehne integrierte Oberkörper-Seitenschutzeinrichtung nach der Erfindung aufweist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht des erfindungsgemäßen Fahrzeugsitzes mit integrierter erfindungsgemäßer Oberkörper-Seitenschutzeinrichtung samt eines Dummies,
- Figur 2 einen Schnitt durch den Fahrzeugsitz samt Schutzeinrichtung und den Dummy längs der Linie II-II nach Figur 1,
- Figur 3 eine Seitenansicht nur des Seitengassacks, der in Figur 1 dargestellt ist, im aufgeblasenen Zustand, und
- Figuren 4a bis 4c Schnittansichten durch.den Gassack nach Figur 3 längs der Linie IV-IV in drei verschiedenen Modifikationen.

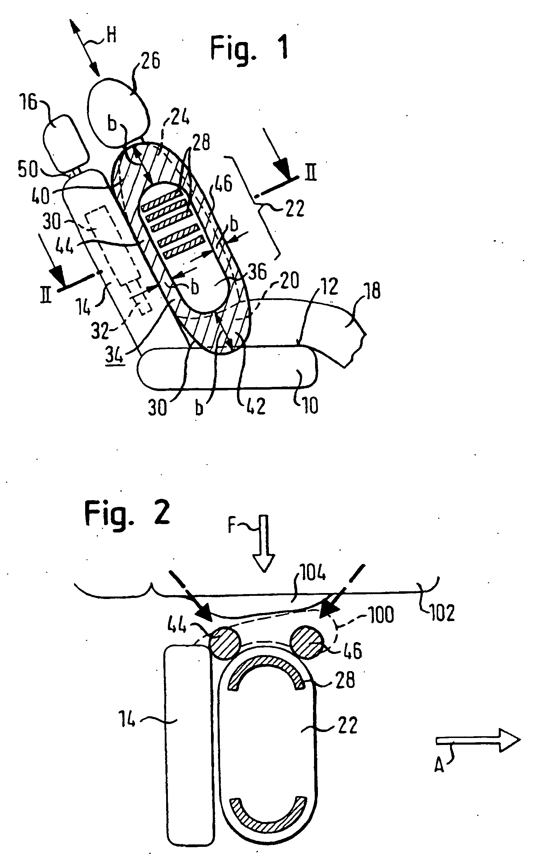

Figur 1 zeigt einen Fahrzeugsitz mit einer integrierten Oberkörper-Seitenschutzeinrichtung. Der Fahrzeugsitz umfaßt ein Sitzpolster 10 mit einer Sitzfläche 12 (Oberseite des Sitzpolsters 10), eine Rückenlehne 14 und eine Kopfstütze 16. In der dargestellten AusKhnmgsform ist auf dem Sitz ein Dummy, genauer gesagt ein EUROSID Nr. 2 oder SI-Dummy II-S positioniert. Diese Art von Dummies sind in Europa bzw. USA verwendete, genormte Dummies, die standardmäßig für Seitenschutzeinrichtungen verwendet werden. Mit dem Bezugszeichen 18 sind die Beine, mit dem Bezugszeichen 20 die Hüfte, mit 22 der Thorax- und Abdomenbereich, mit 24 die Schultern, mit 26 der Kopf und mit 28 die Rippen bezeichnet.

In die Rückenlehne 14 ist eine Oberkörper-Seitenschutzeinrichtung integriert (in unterbrochenen Linien dargestellt), die einen Seitengassack 30 und einen Gasgenerator 32 aufweist. Der Gassack 30 ist auch in aufgeblasenem Zustand dargestellt, wobei er eine schraffierte Kammer 34 besitzt, die langgestreckt oval und ringförmig verläuft. Die aufblasbare Kammer 34 ist umfangsmäßig ringförmig geschlossen und umgibt einen mittleren, nicht aufblasbaren Bereich 36. Die Haupterstreckungsrichtung H der Kammer 34, d.h. ihre Richtung mit größter Ausdehnung, erstreckt sich im wesentlichen parallel zur Rückenlehne 14. In Seitenansicht und bezogen auf die Haupterstreckungsrichtung H, hat die Kammer 34 einen oberen und einen unteren Abschnitt 40 bzw. 42, die seitlich die angrenzende Schulter 24 bzw. die Hüfte 20 abdecken, sowie zwei seitliche, schlauchförmige Abschnitte 44, 46, die den oberen und unteren Abschnitt 40, 42 miteinander verbinden, wobei der obere und untere Abschnitt 40, 42, in seitlicher Richtung, eine größere Breite b hat als die seitlichen Abschnitte 44, 46. Der Gassack 30 und seine Kammer 34 erstrecken sich von der Sitzfläche 12 aufwärts bis wenigstens nahe an den oberen Rand 50 (im dargestellten Fall sogar über den Rand 50) der Rückenlehne 14. Seitlich wird damit der gesamte Oberkörper des Insassen vom Gassack 30 abgedeckt. Der mittlere Bereich 36 beginnt oberhalb der Hüfte 20 und erstreckt sich über 200 bis 250 mm längs der Haupterstreckungsrichtung H aufwärts bis unter die Schultern 24. Die Breite des mittleren Bereichs beträgt etwa zwischen 80 und 120 mm. Der mittlere Bereich 36 ist, wie auch Figur 2 zeigt, in Draufsicht auf den mittleren Bereich des Abdomen und des Thorax des Insassen ausgerichtet.

Bevorzugte weitere Abmaße des Gassacks: Der mittlere Bereich beginnt etwa oberhalb von 200 mm über der Sitzfläche 12 und erstreckt sich bis maximal bis ca. 150 mm unterhalb des oberen Randes 50 der Rückenlehne. Die maximale Breite des aufgeblasenen Gassacks (quer zur Haupterstreckungsrichtung H gemessen) beträgt etwa 300 mm. Die Abmaße des Gassacks betragen etwa 700 mm x 350 mm längs bzw. quer zur Haupterstreckungsrichtung H im nicht aufgeblasenen, entfalteten Zustand.

In Figur 2 ist mit unterbrochenen Linien ein herkömmlicher, ohne eine ringförmige Kammer 34 ausgeführter, kissenförmiger Gassack 100 dargestellt. Im Vergleich zum bei der Erfindung eingesetzten Gassack 30 hat dieser keine durch den mittleren Bereich 36 gebildete, auf den Abdomen- und Thoraxbereich ausgerichtete Aussparung. Die ringförmige Kammer mit den seitlichen Abschnitten 44, 46 sind im aufgeblasenen Zustand zwischen der Türverkleidung 102 und dem Insassen positioniert, genauer gesagt seitlich und vorderhalb der Rückenlehne 14.

Die seitlichen Abschnitte 44, 46 liegen am vorderen und hinteren Ende des Rippenbogens, wogegen der mittlere Abschnitt des Rippenbogens auf den nicht aufblasbaren Bereich 36 ausgerichtet ist.

Bei einer Intrusion der Fahrzeugseitenwand oder einer Fahrzeugtür im Falle eines Seitenaufpralls, dargestellt durch den Pfeil F und die Verformung 104 der Fahrzeugseitenwand oder Fahrzeugtür wird eine seitliche Kraft auf den Gassack aufgebracht, die dieser auf den Insassen teilweise überträgt. Die Kraftübertragung auf den Insassen erfolgt hauptsächlich im oberen und unteren Bereich 40, 42, also über die an den Gassack angrenzende Schulter 24 und das Becken 20. Der Insasse wird darüber hinaus nur noch im hinteren bzw. vorderen Brustbereich, und zwar angepaßt an die Rippengeometrie, belastet. Der Thorax- und Abdomenbereich wird nur geringfügig belastet.

Aufgrund der Geometrie des nur 8 bis 10 1 Aufblasvolumen aufweisenden Gassacks und seiner ringförmigen Kammer 34 kann der Insasse sehr schnell quer zur Fahrzeuglängsrichtung A bei einer Intrusion nach innen bewegt werden. Die Beschleunigung des Insassen im Bereich der Schulter 24 und des Beckens 20 erlaubt aufgrund der Biomechanik eines Insassen ein relativ hohes Druckniveau in der ringförmigen Kammer 34.

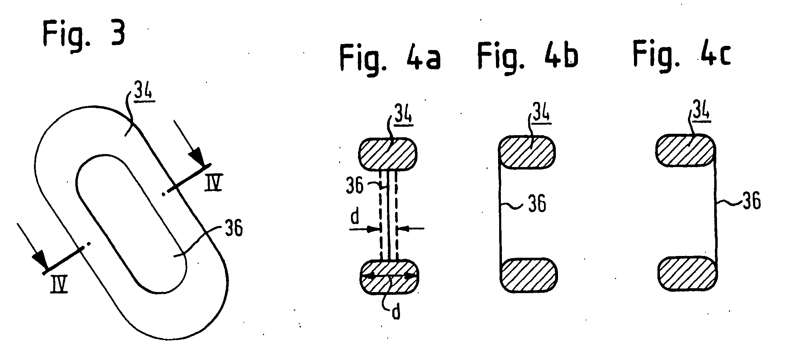

In Figur 3 ist der Gassack 30 noch einmal separat dargestellt.

Die Figuren 4a bis 4c zeigen verschiedene Positionen des mittleren Bereichs 36 relativ zur aufgeblasenen Kammer 34. Gemäß Figur 4a ist der mittlere Bereich, bestehend aus einem abgenähten zentralen Teil des Gassackgewebes im Schnitt mittig zur Kammer 34 positioniert.

Bei der Ausführungsform nach Figur 4b ist der mittlere Bereich 36 auf der dem Insassen zugewandten Seite der Kammer 34 angeordnet. Bei der Ausführungsform nach Figur 4c hingegen ist der mittlere Bereich 36 auf der der Tür oder Seitenwand zugeordneten Seite der Kammer 34 gelegen.

Zu betonen ist auch, daß der mittlere Bereich 36 nicht zwingend ein nicht aufblasbarer Bereich sein muß. Der mittlere Bereich 36 könnte auch, wie in Figur 4a mit unterbrochenen Linien dargestellt, ein aufblasbarer Bereich sein, der im Querschnitt und horizontal quer zur Fahrzeuglängsrichtung jedoch eine deutlich geringere Dicke d aufweist als die Kammer 34, um die Krafteinleitung im Falle einer seitlichen Intrusion über Becken und Schulter zu erreichen.

## Patentansprüche

1. Oberkörper-Seitenschutzeinrichtung für einen Insassen eines einen Fahrzeugsitz aufweisenden Fahrzeugs, mit einem sich seitlich des Oberkörpers erstreckenden Seitengassack (30), der eine ringförmige, aufblasbare Kammer (34) aufweist, die einen mittleren Bereich (36) des Gassacks (30) umgibt, welcher im aufgeblasenen Zustand des Gassacks (30) eine geringere Dicke (d), horizontal und quer zur Fahrzeuglängsrichtung (A) gemessen, hat als die Kammer (34), **dadurch gekennzeichnet, daß** sich die Kammer (34) von der Sitzfläche (12) seitlich des Oberkörpers bis wenigstens nahe des oberen Randes (50) der Rückenlehne (14) des Fahrzeugsitzes erstreckt, wobei die Kammer (34) im aufgeblasenen Zustand oval ist und ihre Haupterstreckungsrichtung H im wesentlichen parallel zur Rückenlehne (14) verläuft und der mittlere Bereich (36) auf den mittleren Bereich des Abdomen und des Thorax des Insassen ausgerichtet ist.

2. Oberkörper-Seitenschutzeinrichtung nach Anspruch 1, **dadurch gekennzeichnet, daß** der mittlere Bereich (36) nicht aufblasbar ausgeführt ist.

3. Oberkörper-Seitenschutzeinrichtung nach Anspruch 1 oder 2, **dadurch gekennzeichnet, daß** die aufblasbare Kammer (34) umfangsmäßig ringförmig geschlossen ist.

4. Oberkörper-Seitenschutzeinrichtung nach einem der vorhergehenden Ansprüche, **dadurch gekennzeichnet, daß** in Seitenansicht der eingebaute, aufgeblasene Seitengassack (30) einen oberen und einen unteren Abschnitt (40, 42) hat, die breiter als seitliche Abschnitte (44, 46) sind, welche den oberen Abschnitt (40) mit dem unteren Abschnitt (42) verbinden.

5. Oberkörper-Seitenschutzeinrichtung nach einem der vorhergehenden Ansprüche, **dadurch gekennzeichnet, daß** der aufgeblasene Seitengassack (30), in Seitenansicht und in eingebautem, aufgeblasenem Zustand, längs einer Breite von maximal etwa 300 mm parallel zur Rückenlehne von der Sitzfläche (12) aufwärts der Rückenlehne (14) verläuft.

6. Oberkörper-Seitenschutzeinrichtung nach einem der vorhergehenden Ansprüche, **dadurch gekennzeichnet, daß** der mittlere Bereich (36) oberhalb von etwa 200 mm über der Sitzfläche (12), bezogen auf den aufgeblasenen Zustand des Seitengassacks (30), beginnt und sich maximal bis ca. 150 mm unterhalb des oberen Randes (50) der Rückenlehne (14) erstreckt.

7. Fahrzeugsitz, **dadurch gekennzeichnet, daß** er eine in der Rückenlehne (14) integrierte Oberkörper-Seitenschutzeinrichtung nach einem der vorstehenden Ansprüche aufweist.

## Claims

1. An upper body side protection device for an occupant of a vehicle having a vehicle seat, comprising a side gas bag (30) which extends to the side of the upper body and has a ring-shaped inflatable chamber (34) surrounding a central region (36) of the gas bag (30) which in the inflated state of the gas bag (30) has a smaller thickness (d), as measured horizontally and transversely to the longitudinal direction (A) of the vehicle, than the chamber (34), **characterized in that** the chamber (34) extends from the seat surface (12) at the side of the upper body to at least close to the upper edge (50) of the back rest (14) of the vehicle seat, the chamber (34) being oval in the inflated state and its main direction of extent H running substantially parallel to the back rest (14), and the central region (36) being aligned to the central region of the abdomen and thorax of the occupant.

2. The upper body side protection device according to Claim 1, **characterized in that** the central region (36) is constructed so as to be non-inflatable.

3. The upper body side protection device according to Claim 1 or 2, **characterized in that** the inflatable chamber (34) is closed peripherally in a ring shape.

4. The upper body side protection device according to any of the preceding claims, **characterized in that** in a side view, the installed inflated gas bag (30) has upper and lower sections (40, 42) which are wider than lateral sections (44, 46) which connect the upper section (40) with the lower section (42).

5. The upper body side protection device according to any of the preceding claims, **characterized in that** the inflated side gas bag (30), in a side view and in the installed inflated state, extends parallel to the back rest from the seat surface (12) upwards with respect to the back rest (14) along a width of a maximum of approximately 300 mm.

6. The upper body side protection device according to any of the preceding claims, **characterized in that** the central region (36) begins above approximately 200 mm over the seat surface (12), in relation to the inflated state of the side gas bag (30), and extends to a maximum up to approximately 150 mm beneath the upper edge (50) of the back rest (14).

7. A vehicle seat, **characterized in that** it has an upper body side protection device according to any of the preceding claims, which is integrated in the back rest (14).

## Revendications

1. Dispositif de sécurité latéral de torse pour un occupant d'un véhicule présentant un siège de véhicule, comportant un coussin à gaz latéral (30) s'étendant latéralement au torse, lequel présente une chambre (34) annulaire gonflable qui entoure une région médiane (36) du coussin à gaz (30), région qui, à l'état de gonflage du coussin à gaz (30), a une épaisseur (d) plus faible que la chambre (34), mesurée horizontalement et transversalement à la direction longitudinale du véhicule, **caractérisé en ce que** la chambre (34) s'étend depuis la surface de siège (12) latéralement au torse jusqu'au moins à proximité du bord supérieur (50) du dossier (14) du siège de véhicule, la chambre (34) étant ovale à l'état de gonflage, et sa direction d'extension principale H s'étendant sensiblement parallèlement au dossier (14), et la région médiane (36) étant alignée sur la région médiane de l'abdomen et du thorax de l'occupant.

2. Dispositif de sécurité latéral de torse selon la revendication 1, **caractérisé en ce que** la région médiane (36) est réalisée non gonflable.

3. Dispositif de sécurité latéral de torse selon la revendication 1 ou 2, **caractérisé en ce que** la chambre (34) gonflable est fermée en forme d'anneau sur la périphérie.

4. Dispositif de sécurité latéral de torse selon l'une des revendications précédentes, **caractérisé en ce qu'**en vue latérale, le coussin à gaz latéral (30) installé et gonflé a des tronçons supérieur et inférieur (40, 42) qui sont plus larges que les tronçons latéraux (44, 46) qui relient le tronçon supérieur (40) au tronçon inférieur (42).

5. Dispositif de sécurité latéral de torse selon l'une des revendications précédentes, **caractérisé en ce qu'**en vue latérale et à l'état installé et gonflé, le coussin à gaz latéral (30) gonflé s'étend parallèlement au dossier depuis la surface de siège (12) vers le haut du dossier (14), le long d'une largeur d'environ 300 mm au maximum.

6. Dispositif de sécurité latéral de torse selon l'une des revendications précédentes, **caractérisé en ce que** la région médiane (36) commence au-dessus d'environ 200 mm au-dessus de la surface de siège (12), par rapport à l'état gonflé du coussin à gaz latéral (30), et s'étend au maximum jusqu'à 150 mm au-dessous du bord supérieur (50) du dossier (14).

7. Siège de véhicule, **caractérisé en ce qu'**il présente un dispositif de sécurité latéral de torse selon l'une des revendications précédentes, qui est intégré dans le dossier (14).
